(19) **Europäisches Patentamt / European Patent Office / Office européen des brevets**

(11) **EP 1 526 072 B1**

(12) **EUROPEAN PATENT SPECIFICATION**

(45) Date of publication and mention
of the grant of the patent:
**23.07.2008 Bulletin 2008/30**

(51) Int Cl.:
***B64G 1/24*** (2006.01)     ***G05D 1/08*** (2006.01)

(21) Application number: **03024205.1**

(22) Date of filing: **21.10.2003**

(54) **Dynamic yaw steering method for spacecraft**

Dynamisches Giersteuerungsverfahren für Raumfahrzeuge

Méthode de contrôle dynamique en lacet pour engins spatiaux

(84) Designated Contracting States:
**DE ES FR GB IT**

(43) Date of publication of application:
**27.04.2005 Bulletin 2005/17**

(73) Proprietor: **Astrium GmbH**
**81663 München (DE)**

(72) Inventors:
• **Ebert, Klaus, Dr.**
**85521 Ottobrunn (DE)**
• **Oesterlin, Wilfried, Dr.**
**83620 Feldkirchen-Westerham (DE)**

(74) Representative: **Ulrich, Thomas et al**
**EADS Deutschland GmbH,**
**LG-PM - Patente**
**81663 München (DE)**

(56) References cited:
**EP-A- 0 785 132**     **EP-A- 1 167 189**
**US-A- 5 794 891**     **US-B1- 6 293 502**

• BARKER L, STOEN J: "Sirius satellite design: The challenges of the Tundra orbit in commercial spacecraft design" GUIDANCE AND CONTROL 2001, PROCEEDINGS OF THE ANNUAL AAS ROCKY MOUNTAIN CONFERENCE, 31 January 2001 (2001-01-31), pages 575-596, XP0008029158 BRECKENRIDGE, CO, USA
• BAO W: "MATLAB Quick Reference"[Online] July 2001 (2001-07), XP002275236 Retrieved from the Internet: URL:http://www.cz3.nus.edu.sg/~bao/teach/c z4206/matqkref.pdf> [retrieved on 2004-03-26]

**Description**

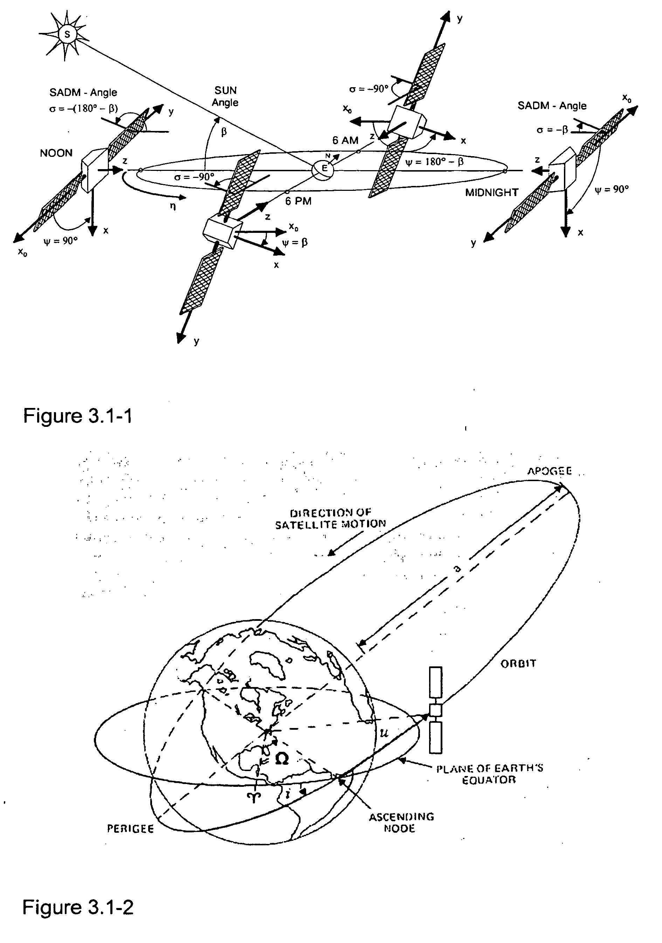

The following invention relates to a method for yaw steering of a spacecraft, i.e. for satellites, space stations and the like. State of the art methods only provide a yaw steering for high sun elevation angles and do not provide any yaw steering for low or zero elevation angles at all or they show a discontinuous temporal behaviour of the acceleration about the yaw axis. Sun elevation angle is defined as the angle of the sun above an orbital plane of the spacecraft as shown in fig. 3.1-1.

The document "Sirius satellite design: The challenges of the Tundra orbit in commercial spacecraft design" from Lee Barker and Jeffrey Stoen, GUIDANCE AND CONTROL 2001, PROCEEDINGS OF THE ANNUAL AAS ROCKY MOUNTAIN CONFERENCE, 31 Jamuary 2001, pages 575-596, BRECKENRIDGE, CO, USA seems to be the closest prior art as it discloses a method for yaw steering of a spacecraft, wherein an attitude control law is applied, which is designed such that any discontinuities in the angular acceleration are avoided for all sun elevation angles but a small cosine loss of power from solar array has to be accepted.

This problem is solved by the method for yaw steering a claim in claim 1.

Preferably at least part of the attitude control law is based on a smoothing function being a function of an orbital position parameter of the spacecraft, where the orbital position can for example be expressed as an angle, as shown in fig. 3.1-1.

It can be provided that in that a first part of the attitude control law is applied for all sun elevation angles bigger or equal a defined sun elevation angle, this first part of the control law being independent of smoothing function, and that a second part of the attitude control law is applied for all sun elevation angles smaller than a defined sun elevation angle this second part of the control law being based on smoothing function. So two parts are provided for the control law which can be optimised separately and designed specifically for the respective ranges of incident angles.

It can be further provided, that the smoothing function comprises a design parameter which can be adapted in order to optimise the smoothing effect of smoothing function. This design parameter can be adapted once before launching the control law or even dynamically for dynamic optimisation.

It can be further provided that the attitude control law is designed such that a first panel of the satellite body structure is always directed away from the sun. In particular, the plane defined by the first panel can be oriented parallel to the yaw axis of the satellite. So for example, this panel can be the panel shown in fig. 3.1-1 to which the positive x-axis forms the normal.

It can be further provided that the attitude control law is designed such that a second and third panel of the satellite body structure always have an incident sun angle smaller than a defined angle. These panels can in particular be the panels being more or less perpendicular to the y-axis as shown in fig. 3.1-1.

The following detailed description and the corresponding figures show a specific embodiment of the invention concerning a yaw steering method for satellites.

## Table of Contents

| | | | |
|---|---|---|---|
| **1.** | **Scope** | | **6** |
| **2.** | **Introduction to Yaw Steering** | | **7** |
| **3.** | **Yaw Steering** | | **8** |
| **3.1.** | **Kinematic Yaw Steering** | | **8** |
| **3.2.** | **Yaw Steering Options for small Sun Elevation** | | **9** |
| 3.2.1. | Constant Yaw | | 9 |
| 3.2.2. | Modified Kinematic Yaw Steering | | 11 |
| **3.3.** | **Dynamic Yaw Steering** | | **11** |
| 3.3.1. | Dynamic Yaw Steering Law | | 11 |
| 3.3.2. | Design of Dynamic Yaw Steering Law Parameter | | 12 |
| 3.3.3. | Sun Elevation Zero Transient | | 13 |
| 3.3.4. | Evaluation of Dynamic Yaw Steering Rate and Angular Acceleration | | 14 |
| **4.** | **Conclusion** | | **16** |
| **5.** | **Annex - Reference Plots** | | **17** |
| **5.1.** | **Dynamic Yaw Steering for $\beta \geq 0°$** | | **18** |
| **5.2.** | **Dynamic Yaw Steering for $\beta \leq 0°$** | | **18** |
| **5.3.** | **Dynamic Yaw Steering for Transient from $\beta \geq 0°$ to $\beta \leq 0°$** | | **18** |
| **5.4.** | **Dynamic Yaw Steering for $\beta \geq 0°$ and $\pm 2°$ Yaw Bias Error** | | **18** |
| **6.** | **Annex 2 - Yaw Steering Specification (Matlab M-File)** | | **19** |

**List of Figures**

| | | |
|---|---|---|
| Figure 3.1-1: | Yaw Steering geometry | 8 |
| Figure 3.1-2: | Orbit Parameter (modified from J.R.Wertz) | 8 |
| Figure 3.1-3: | Sun Parameter | 8 |
| Figure 3.2-1: | Spacecraft motion for Constant Yaw Steering Option ($\beta \geq 0$) | 10 |
| Figure 3.2-2: | SADM motion for Constant Yaw Steering Option ($\beta \geq 0$) | 10 |
| Figure 3.2-3: | Spacecraft motion for Constant Yaw Steering Option ($\beta \leq 0$) | 10 |
| Figure 3.2-4: | SADM motion for Constant Yaw Steering Option ($\beta \leq 0$) | 10 |
| Figure 3.3-1: | Smoothing function f = f($\eta$) for Dynamic Yaw Steering | 12 |
| Figure 3:3-2: | Dynamic Yaw Steering for d = 10: $\dot\psi_{max,\delta} < \dot\psi_{max}$ and $\ddot\psi_{max,\delta} < \ddot\psi_{max}$ | 13 |
| Figure 3.3-3: | Dynamic Yaw Steering for d = 500: $\dot\psi_{max,\delta} > \dot\psi_{max}$ and $\ddot\psi_{max,\delta} > \ddot\psi_{max}$ | 13 |
| Figure 3.3-4: | Dynamic Yaw Steering for d = 258: $\dot\psi_{max,\delta} \leq \dot\psi_{max}$ and $\ddot\psi_{max,\delta} \leq \ddot\psi_{max}$ | 13 |
| Figure 5.1-1: | GSTB-V2 Yaw Steering Angle, Rate and Angular Acceleration for $\beta \geq 0$ | 18 |
| Figure 5.1-2: | GSTB-V2 SADM Angle and Rate for $\beta \geq 0$ | 18 |
| Figure 5.1-3: | GSTB-V2 Sun Incidence on +/- x-Panel for $\beta \geq 0$ | 18 |
| Figure 5.1-4: | GSTB-V2 Sun Incidence on +/- y-Panel for $\beta \geq 0$ | 18 |
| Figure 5.1-5: | GSTB-V2 Sun Incidence on +/- Solar Array Panel for $\beta \geq 0$ | 18 |
| Figure 5.2-1: | GSTB-V2 Yaw Steering Angle, Rate and Angular Acceleration for $\beta \leq 0$ | 18 |
| Figure 5.2-2: | GSTB-V2 SADM Angle and Rate for $\beta \leq 0$ | 18 |
| Figure 5.2-3: | GSTB-V2 Sun Incidence on +/- x-Panel for $\beta \leq 0$ | 18 |
| Figure 5.2-4: | GSTB-V2 Sun Incidence on +/- y-Panel for $\beta \leq 0$ | 18 |
| Figure 5.2-5: | GSTB-V2 Sun Incidence on +/- Solar Array Panel for $\beta \leq 0$ | 18 |
| Figure 5.3-1: | GSTB-V2 Yaw Steering Angle, Rate and Angular Acceleration for $\beta$ transient | 18 |
| Figure 5.3-2: | GSTB-V2 SADM Angle and Rate for $\beta$ transient | 18 |
| Figure 5.3-3: | GSTB-V2 Sun Incidence on +/- x-Panel for $\beta$ transient | 18 |
| Figure 5.3-4: | GSTB-V2 Sun Incidence on +/- y-Panel for $\beta$ transient | 18 |
| Figure 5.3-5: | GSTB-V2 Sun Incidence on +/- Solar Array Panel for $\beta$ transient | 18 |
| Figure 5.4-1: | GSTB-V2 Sun Incidence on +/- x-Panel for $\beta \geq 0$ and +2˚ Yaw Bias | 18 |
| Figure 5.4-2: | GSTB-V2 Sun Incidence on +/- x-Panel for $\beta \geq 0$ and -2˚ Yaw Bias | 18 |
| Figure 5.4-3: | GSTB-V2 Sun Incidence on +/- y-Panel for $\beta \geq 0$ and +2˚ Yaw Bias | 18 |
| Figure 5.4-4: | GSTB-V2 Sun Incidence on +/- y-Panel for $\beta \geq 0$ and -2˚ Yaw Bias | 18 |
| Figure 5.4-5: | GSTB-V2 Sun Incidence on +/- Solar Array Panel for $\beta \geq 0$ & +2˚ Yaw Bias | 18 |
| Figure 5.4-6: | GSTB-V2 Sun Incidence on +/- Solar Array Panel for $\beta \geq 0$ & -2˚ Yaw Bias | 18 |

## 1. Scope

This Technical Note presents the special Yaw Steering Guidance Law as applicable for GSTB-V2, where

- Spacecraft continuous Nadir pointing is performed with one selected axis (z-axis)
- Spacecraft rotation is performed around the nadir pointed axis in order to orient the S/C solar array normal in an optimal way towards the Sun, based on a state-of-the-art one-axis solar array drive mechanism
- One selected spacecraft panel (+x panel) perpendicular to the nadir line and to the solar array axis is oriented such, that Sun incidence is avoided (with the exception of sliding incidence)
- The two spacecraft panels (y-panels), the panel normal of which is parallel to the solar array axes, are illuminated from the Sun with an incidence angle less than a predefined critical angle

A short overview is given of the yaw steering principle, state-of-the-art solutions and the special law as applied to GSTB-V2 incl. some analysis results and reference runs.

## 2. Introduction to Yaw Steering

In order to optimise the electric power generation from the solar arrays, the solar array active plane has to be oriented perpendicular to the sun line. Otherwise the available power would approximately be reduced with the cosine of the Sun incidence angle. Based on an Earth pointed platform, the solar array pointing requires two independent rotations in general. In order to avoid rather complex two-axes Solar Array Drive Mechanisms (SADM), two well known types of operation are established, depending on the Sun elevation w.r.t. the orbit plane:

- Zero (or at least near zero) inclination - applicable for all GEO spacecraft - where the Sun elevation w.r.t. the orbit plane is ≤ 23.44˚: Only one rotation is performed with a maximum power loss of about 8.3%. The spacecraft is operated at a constant (0˚, 180˚) yaw angle ("constant yaw") with the solar array axis oriented parallel to the orbit normal. Only the solar panel is rotated around its longitudinal axis using an one-axis SADM.

- Non-zero inclination - applicable for most LEO and MEO satellites - where the Sun elevation w.r.t. the orbit plane changes in a wide range |β| ≤ 23.44˚ + i (i = inclination): The first rotation is performed by the spacecraft itself, where the satellite is rotated around its Earth pointing yaw-axis (z-axis, "yaw steering") orienting the spacecraft x/z-plane parallel to the Sun line (i.e. Solar array axis and spacecraft y-axis perpendicular to the Sun line). For the second rotation again an off-the-shelf one-axes SADM is used, rotating the solar panel around its longitudinal axis.

This note will concentrate on the latter subject.

### 3. Yaw Steering

### 3.1. Kinematic Yaw Steering

The Yaw Steering law is derived from pure geometric relations as indicated in Figure 3.1-1: Figure 3.1-1: Yaw Steering geometry

According to the above figure the following "kinematic" yaw steering law can be derived (Note: arctan(x,y) in the notation here (similar to MAPLE) corresponds to the well-known function atan2(x,y) as used in higher computer languages, e.g. FORTRAN, Matlab, ...)

$$\psi = \arctan(\tan\beta, \sin\eta)$$
$$\sigma = \arctan(-\sqrt{1 - \cos^2\beta \cdot \cos^2\eta}, \ -\cos\beta \cdot \cos\eta) \qquad \text{(eq. 3.1-1),}$$

where (according to the above figure):

η = η(t) describes the orbit in-plane motion (η = 0 is obtained from the projection of the Sun line to the orbit plane)
β = β(t) is the sun elevation w.r.t. the orbit plane
ψ(t) is the spacecraft reference yaw angle w.r.t. the LVLH coordinate system (z axis pointing towards the Earth centre)
σ(t) is the solar array drive mechanism (SADM) rotation angle (for σ = 0 the solar panel normal points parallel to the spacecraft z axis)

The transformation to the usual Orbit and Sun parameter is given below (e.g. in an inertial frame centred in the Earth, X pointing towards Vernal Equinox ϒ, Z pointing to the North and Y augmenting to a right-hand system)
Figure 3.1-2: Orbit Parameter (modified from J.R.Wertz)
where

Ω - Right ascension of ascending node (RAAN)
i - Orbit inclination angle
u - Argument of latitude
ε = 23.44˚ - Obliquity of ecliptic
λ - Sun seasonal angle (λ angle determined in the ecliptic plane, λ = 0˚ at Vernal Equinox, see next figure)

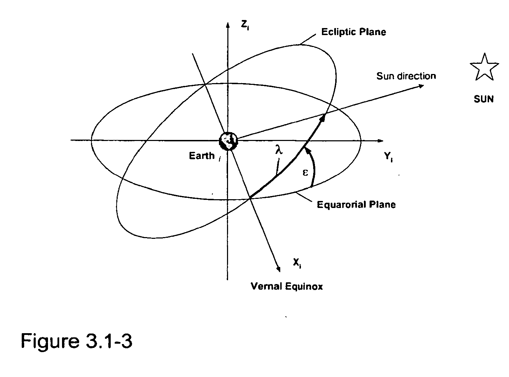

Figure 3.1-3: Sun Parameter

The relevant yaw steering angles β and η can be calculated from:

$$\beta = \arcsin(\sin\varepsilon \cdot \sin\lambda \cdot \cos i + \cos\lambda \cdot \sin\Omega \cdot \sin i - \cos\varepsilon \cdot \sin\lambda \cdot \cos\Omega \cdot \sin i)$$

$$u_0 = \arctan((\cos\Omega \cdot \cos i \cdot \cos\varepsilon \cdot \sin\lambda + \sin i \cdot \sin\varepsilon \cdot \sin\lambda - \sin\Omega \cdot \cos i \cdot \cos\lambda),(\cos\Omega \cdot \cos\lambda + \sin\Omega \cdot \cos\varepsilon \cdot \sin\lambda)$$

$$\eta = u - u_0$$

(eq. 3.1-2)

Neglecting seasonal variation and orbit plane motion during a certain time period, we have approximately for a circular orbit with orbital rate $\omega_0$:

$$\dot{\eta}(t) \approx \omega_0 = const.$$
$$\beta(t) \approx const.$$

(eq. 3.1-3)

The key element concerning yaw steering dynamics is the elevation angle $\beta$. For GSTB-V2 and GalileoSat (orbit inclination i = 56.0°) the total variation is $0° \leq |\beta| \leq 79.44°$. If the kinematic yaw-steering law would be applied for the complete range of $\beta$, a singularity would occur for $\beta = 0°$ and $\eta = 0°$, 180°, requiring indefinite spacecraft and SADM rotational rates and rotational accelerations, or at least high rates and accelerations for $\beta \approx 0°$. Thus special measures have to be applied in a predefined band $|\beta| \leq \beta_0$, assuming this band centred about $\beta = 0°$.

### 3.2. Yaw Steering Options for small Sun Elevation

### 3.2.1. Constant Yaw

If only power constraints are considered, for $\beta = 0°$ the solar array planes can be oriented perpendicular to the Sun by only one (SADM) rotation, if the satellite y-axis is pointed (constantly) perpendicular to the orbit plane (like a "standard" spacecraft, e.g. GEO zero inclination applications). If the elevation angle $\beta$ is in the predefined band $\pm\beta_0$, this "standard" attitude will be maintained ("Constant Yaw", $\psi = 0°$), however on the cost of a slight power loss as indicated above for the GEO applications proportional to 1-cos($\beta$). Typical values are $\beta_0 = 10°$, resulting in a tolerable power degradation of about 1.5% and moderate spacecraft agility and SADM motion requirements.

Based on thermal requirements (explained in more detail in the next chapter), for the GSTB-V2 and Galileo the critical Sun elevation angle is reduced to $\beta_0 = 2°$. In the following figures selected situations for maximum, critical $\pm$ $\varepsilon$ ($\varepsilon$ - "arbitrary small value") and minimum magnitude Sun elevation angle are presented for the GalileoSat and GSTB-V2 orbit, separated for $\beta \geq 0$ as well as for $\beta \leq 0$. However, it is mentioned, that these figures are only sketched here as an example. At the critical positive elevation, where $\beta = \beta_0$ we obtain $\psi_{max} = 178°$ and $\sigma_{max} = 0.007°/s$. For the "critical orbit angle" $\eta = 0°$, 180°, 360°, ..., we get $\dot{\psi}_{max} = 0.2°/s$ , $\ddot{\psi}_{max} = 7.8\mu rad/s$. It is obvious, that the yaw steering profiles for $\beta \geq 0$ and $\beta \leq 0$ provide different, but symmetric shapes w.r.t. the $\psi = 0°$ line, here referred to as the "pos. yaw steering shape" and the "neg. yaw steering shape". The transition between both types can easily be performed e.g. in a certain area near $\eta = 90°$, starting from constant yaw.

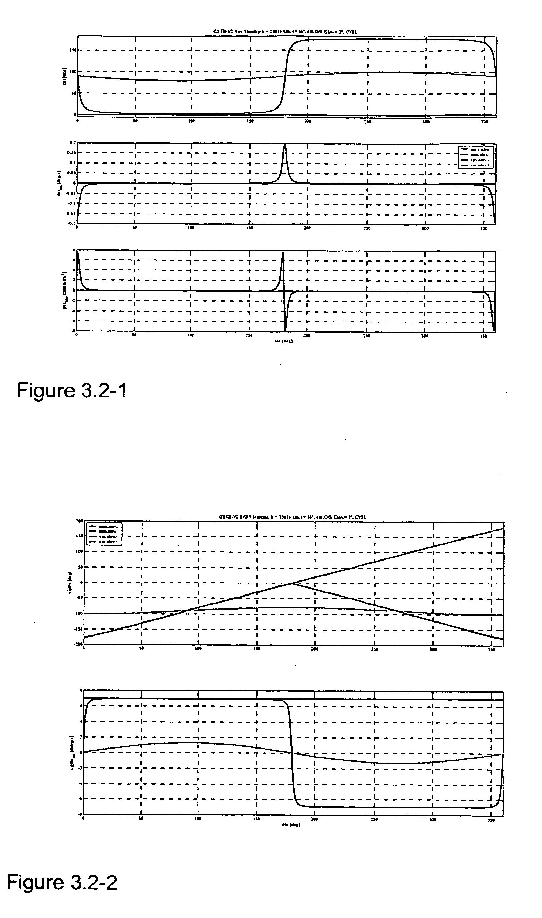

Figure 3.2-1: Spacecraft motion for Constant Yaw Steering Option ($\beta \geq 0$)

Figure 3.2-2: SADM motion for Constant Yaw Steering Option ($\beta \geq 0$)

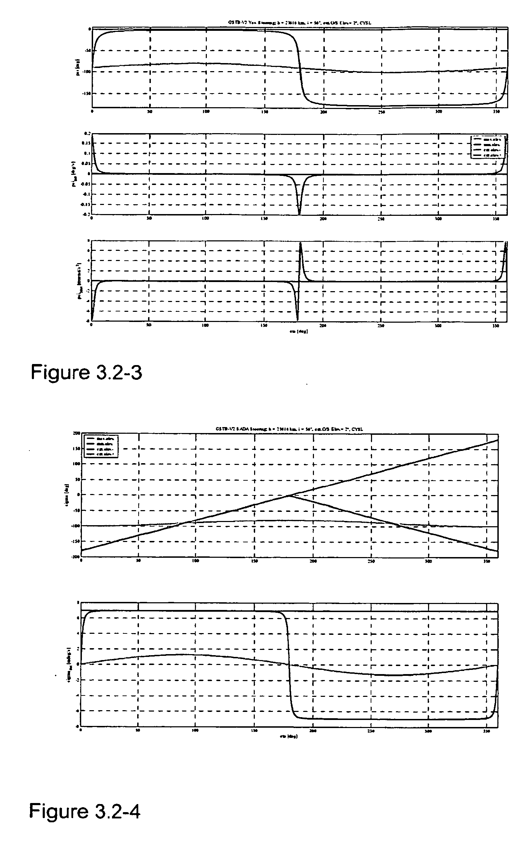

Figure 3.2-3: Spacecraft motion for Constant Yaw Steering Option ($\beta \leq 0$)

Figure 3.2-4: SADM motion for Constant Yaw Steering Option ($\beta \leq 0$)

### 3.2.2. Modified Kinematic Yaw Steering

Due to thermal constraints for GSTB-V2 and for GalileoSat two major additional requirements have to be considered, which significantly influence the yaw steering scenario:

- No Sun incidence on the spacecraft + x panel shall occur (with the exception of slipping incidence)
- Sun incidence on the spacecraft $\pm$ y panel shall be less than 2°

From the first requirement it can be concluded, that yaw steering - how ever modified and how ever taking into account the system actuation capabilities - has to be performed at any time, independent of the Sun elevation. The second requirement puts constraints on the critical angle $\beta_0$, where the transition from Kinematic Yaw Steering law to the modified yaw steering law in the band $|\beta| \leq \beta_0$ should take place.

The next chapter will provide detailed information how the two above requirements together with the spacecraft actuation capabilities can be combined by a dynamically shaped yaw steering law, shortly referenced here as "Dynamic Yaw Steering".

### 3.3. Dynamic Yaw Steering

### 3.3.1. Dynamic Yaw Steering Law

Basic idea concerning yaw steering in the critical band $|\beta| \leq \beta_0$ is, to limit the S/C angular motion requirements at orbit angles $\eta = 0, 180°, 360°, ...$ (see above figures). For $\beta = 0°$, in an ideal case, a $\Delta\psi = 180°$ S/C flip within an infinitesimal small time instant would be required, meaning that indefinite S/C rate and acceleration would occur. In reality, of course, only very limited S/C rate and angular acceleration are feasible due to the actuation system limited capabilities, i.e. torque and angular momentum limits of the reaction wheels.

Several options could be applied, such as a simple "bang-bang" type maximum acceleration (with predefined torque limits) and with limited maximum angular rate. However, excitation of solar array oscillation as well as fuel sloshing motion should be avoided. Furthermore, for gyro-less Normal Mode operation, smooth type actuation is preferable, too.

Among a lot of dynamically smooth yaw steering laws, the following has basically been selected for the critical band $|\beta| \leq \beta_0$. However, a special procedure has to be applied approaching $\beta = 0$ (according to a change in sign for $\beta$), where a smooth transient between the pos. and neg. yaw steering shape has to be applied (switching logic for $\delta$ see the further chapter for details).

$$-\beta_0 \leq \beta \leq \beta_0: \qquad \psi = \arctan(\tan\beta_d, \sin\eta)$$

$$\beta_d = \beta + f \cdot (\beta_0 \cdot \delta - \beta), \quad \delta = \pm 1 \qquad\qquad (\text{eq. 3.3.1-1})$$

$$f = \frac{\cos^2\eta}{1 + d \cdot \sin^2\eta}, \qquad d \quad - \quad design\ parameter$$

It should be mentioned, that the SADM steering law remains unchanged compared to the kinematic law presented in eq. 3.1-1.

The smoothing function $f = f(\eta)$ is sketched in the next figure including typical values for d as parameter:

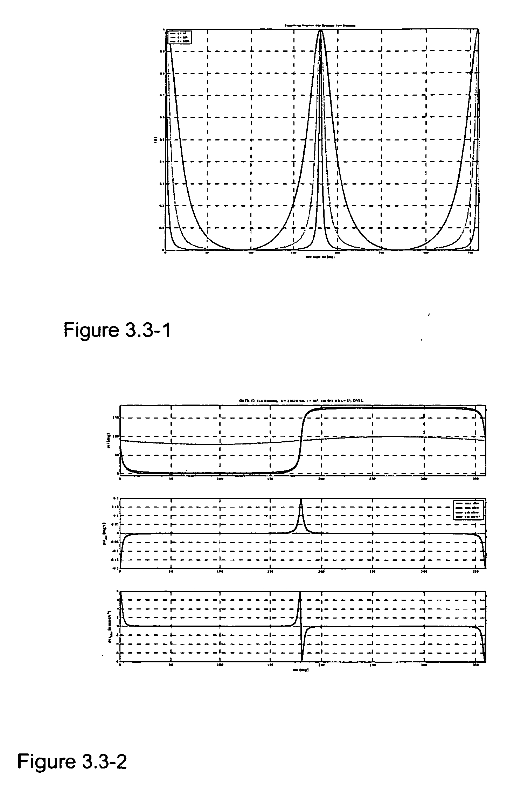

Figure 3.3-1: Smoothing function $f = f(\eta)$ for Dynamic Yaw Steering

The basic idea of the Dynamic Yaw Steering profile can be explained with the above figure together with eq. 3.3.1-1:

- For $\beta = \beta_0$ the transient between Kinematic and Dynamic Yaw Steering solution is obtained in a continuous way
- For $|\beta| < \beta_0$ and in a certain range around the critical orbit angle $\eta = 0°, 180°, 360°, ...$, we get $\beta_d \rightarrow \beta_0$. Thus the yaw steering motion is smoothed to the behaviour like for the critical Sun elevation angle $\beta_0$, which is the "lower" limit of the Kinematic Yaw Steering profile, being per definition in-line with the S/C actuation system capabilities.
- For $|\beta| < \beta_0$ and in the dynamically non-critical rest period along the orbit angle, the yaw steering motion is performed as for $\beta_d \rightarrow \beta$, which is close to the standard kinematic solution.

Such a solution provides the advantage of a smooth yaw steering motion, avoiding any discontinuities for the yaw steering angle as well as for rate and angular acceleration, and thus also for the actuation torques.

### 3.3.2. Design of Dynamic Yaw Steering Law Parameter

One major design parameter has to be optimised for the given mission orbit, which is the parameter d in eq. 3.3.1-1. Basic idea is, not to exceed the actuation requirements from Kinematic Yaw Steering at its limits for $\beta = \beta_0$. Instead of an analytic way a rather pragmatic solution is presented here for determination of the optimum parameter:

- Determination of dimensioning (but feasible) Kinematic Yaw Steering rotational motion requirements in terms of maximum angular rate $\dot{\psi}_{max}$ and angular acceleration $\ddot{\psi}_{max}$ by numerical evaluation of $\dot{\psi} = \dot{\psi}(\eta)$ and $\ddot{\psi} = \ddot{\psi}(\eta)$ for $\beta = \beta_0$ (see chapter 3.2.1).
- Determination of dimensioning Dynamic Yaw Steering rotational motion requirements in terms of maximum angular rate $\dot{\psi}_{max,d}$ and angular acceleration $\ddot{\psi}_{max,d}$ by numerical evaluation of $\dot{\psi} = \dot{\psi}(\eta)$ and $\ddot{\psi} = \ddot{\psi}(\eta)$ for $\beta = 0$ and given parameter d.
- Perform proper variation of d and select the optimum parameter such, that $\dot{\psi}_{max,d} \leq \dot{\psi}_{max}$ as well as $\ddot{\psi}_{max,d} \leq \ddot{\psi}_{max}$, where at least one constraint should be fulfilled as equality.

The next figures indicate the procedure, where the results from chapter 3.2.1 are taken for the dimensioning requirements. The parameter d has been selected as d = 10, d = 500, and after some iterations, the optimum **d = 258** for the given orbit was obtained:

Figure 3.3-2: Dynamic Yaw Steering for d = 10: $\dot{\psi}_{max,d} < \dot{\psi}_{max}$ and $\ddot{\psi}_{max,d} < \ddot{\psi}_{max}$

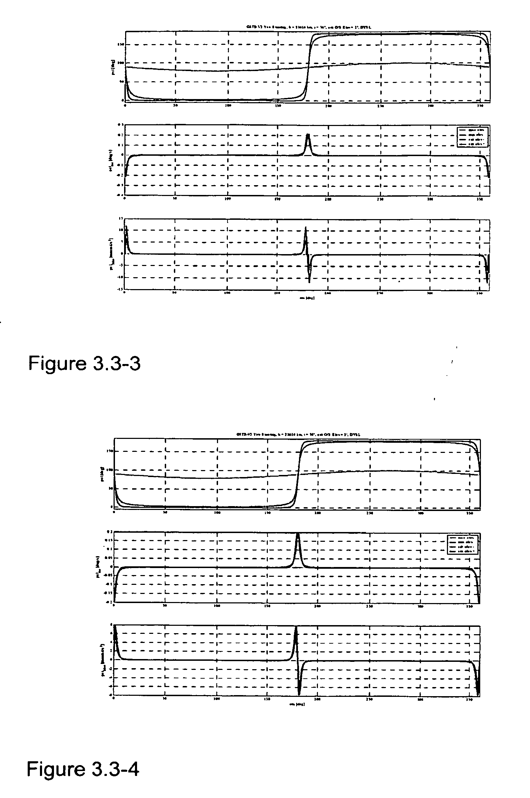

Figure 3.3-3: Dynamic Yaw Steering for d = 500: $\dot{\psi}_{max,d} > \dot{\psi}_{max}$ and $\ddot{\psi}_{max,d} > \ddot{\psi}_{max}$

Figure 3.3-4: Dynamic Yaw Steering for d = 258: $\dot{\psi}_{max,d} \leq \dot{\psi}_{max}$ and $\ddot{\psi}_{max,d} \leq \ddot{\psi}_{max}$

### 3.3.3. Sun Elevation Zero Transient

From the above results, it can easily be concluded, that the optimum orbit angle $\eta_t$ for transient from the positive ($\beta > 0$, $0 \leq \psi \leq +180°$) to the negative yaw steering shape ($\beta < 0$, $-180° \leq \psi \leq 0$) (and vice versa) would be for $\beta \cong 0$ and either $\eta_{t1} = 90°$ or $\eta_{t2} = 270°$ (in principle). In order to keep the yaw steering angle numerically always in the band $-180° \leq \psi \leq +180°$ (avoiding complicated on-board modulo 360° operations) $\eta_{t1}$ it preferred.

Thus any transient between positive and negative yaw steering shapes will simply be performed for $\eta_t = 90°$. However, in reality $\beta = 0$ and $\eta_t = 90°$ will not occur simultaneously. To overcome this problem, the following simple procedure could be applied:

- When approaching the $\eta_t = 90°$ point, the actual Sun elevation $\beta_1 = \beta(\eta_t)$ is calculated
- Subsequently the future Sun elevation $\beta_2 = \beta(\eta_t + 360°)$ for one additional orbit is calculated from orbital elements and Sun motion propagation
- If no change in sign between both values $\beta_1$, and $\beta_2$ will occur ($\beta_1 \cdot \beta_2 > 0$), the actual yaw steering shape is maintained based on the actual Sun elevation angle $\beta$, i.e. $\delta = \text{sign}(\beta_1)$
- If a change in sign between both values $\beta_1$, $\beta_2$ occurs ($\beta_1 \cdot \beta_2 < 0$), the following procedure is applied:

  ○ If $|\beta_1| \geq |\beta_2|$, the actual yaw steering shape is maintained, i.e. $\delta = \text{sign}(\beta_1)$ and the switching to the complementary shape is postponed to the next orbit
  ○ If $|\beta_1| < |\beta_2|$, the actual shape is instantaneously switched to the complementary one, i.e. $\delta = \text{sign}(\beta_2)$

Note:

If $\beta_1$, or $\beta_2 = 0$ - which is rather unlikely - a numerically small value $\neq 0$ should be selected.

### 3.3.4. Evaluation of Dynamic Yaw Steering Rate and Angular Acceleration

The knowledge of yaw steering angular rate and angular acceleration is required for

- Engineering purposes
- Usage as feed-forward commands in the on-board control loops for dynamic tracking control improvement

To avoid numerical differentiation - in particular for calculation of in-orbit feed-forward commands - this chapter provides the analytic equations for angular rate and acceleration. The differentiation procedure is rather elementary and is performed here with some substitutions in a consecutive way based on eq. 3.3.1-1 and eq. 3.1-3, introducing some basic mathematical conversions in order to avoid numerical undefined expressions. For completeness the basic equations are recalled, together with the solar array drive steering algorithms:

$$|\beta| \geq \beta_0 : \textit{Kinematic Yaw Steering}$$

$$f = \dot{f} = \ddot{f} = 0 \qquad\qquad (\text{eq.3.3.4-0})$$

$$|\beta| < \beta_0 : \textit{Dynamic Yaw Steering}$$

$$f = \frac{\cos^2 \eta}{1 + d \cdot \sin^2 \eta}$$

$$\dot{f} = -(1+d) \cdot \omega_0 \cdot \frac{\sin 2\eta}{(1 + d \cdot \sin^2 \eta)^2} \qquad\qquad (\text{eq.3.3.4-1})$$

$$\ddot{f} = -2 \cdot (1+d) \cdot \omega_0^2 \cdot \frac{\cos 2\eta - d \cdot \sin^2 \eta \cdot (1 + 2 \cdot \cos^2 \eta)}{(1 + d \cdot \sin^2 \eta)^3}$$

$$\beta_d = \beta + f \cdot (\beta_0 \cdot \delta - \beta)$$

$$\dot{\beta}_d = \dot{f} \cdot (\beta_0 \cdot \delta - \beta)$$

$$\ddot{\beta}_d = \ddot{f} \cdot (\beta_0 \cdot \delta - \beta)$$

$$\delta = \pm 1 \qquad\qquad (\text{eq.3.3.4-2})$$

*Sun elevation zero transient together with accordingly selected value for $\delta$ as described above*

$$\psi = \arctan(\tan \beta_d, \sin \eta)$$

$$u = \sin \eta \cdot \dot{\beta}_d - 0.5 \cdot \sin 2\beta_d \cdot \cos \eta \cdot \omega_0$$

$$v = 1 - \cos^2 \beta_d \cdot \cos^2 \eta$$

$$\dot{\psi} = \frac{u}{v} \qquad\qquad (\text{eq.3.3.4-3})$$

$$\dot{u} = \cos \eta \cdot \omega_0 \cdot \dot{\beta}_d + \sin \eta \cdot \ddot{\beta}_d - \cos 2\beta_d \cdot \cos \eta \cdot \omega_0 \cdot \dot{\beta}_d + 0.5 \cdot \sin 2\beta_d \cdot \sin \eta \cdot \omega_0^2$$

$$\dot{v} = \sin 2\beta_d \cdot \cos^2 \eta \cdot \dot{\beta}_d + \cos^2 \beta_d \cdot \sin 2\eta \cdot \omega_0$$

$$\ddot{\psi} = \frac{v \cdot \dot{u} - u \cdot \dot{v}}{v^2}$$

In order to avoid discontinuities in the yaw angle $\psi$ in the case where $\delta \cdot \beta < 0$, the yaw angle has to be modified according to $\psi_i := \psi_i$ - *sign* $(\psi_i - \psi_{i-1}) \cdot 2\pi$ *if* $|\psi_i - \psi_{i-1}| > \pi$, where i denotes the instantaneously determined yaw angle, and i-1 the yaw angle one sampling period before.

The SADM angle and rate are determined from the following expressions:

$$\sigma = \arctan(-\sqrt{1 - \cos^2 \beta \cdot \cos^2 \eta}, \; -\cos \beta \cdot \cos \eta)$$

$$\dot{\sigma} = \frac{\omega_0 \cdot \cos \beta \cdot \sin \eta}{\sqrt{1 - \cos^2 \beta \cdot \cos^2 \eta}} \qquad \text{(eq.3.3.4-4)}$$

If $1-\cos^2 \beta \cdot \cos^2 \eta$ approaches zero, the limit value for $\dot{\sigma}$ is given by $\dot{\sigma} = \omega_0 \cdot$ *sign* (sin η)

Thus, together with the Sun elevation zero transient - as described in the previous chapter - the total set of equations is visible for implementation.

## 4. Conclusion

The Technical Note on hand describes a simple yaw steering law as supplement to the known Kinematic Yaw Steering for application to Earth pointed satellites *) combining the following features:

- Spacecraft is continuously Nadir pointed with one selected axis
- Spacecraft performs a rotation around the nadir pointed axis in order to orient the S/C solar array normal in an optimal way towards the Sun, based on a state-of-the-art one-axis solar array drive mechanism
- One selected spacecraft panel perpendicular to the nadir line and to the solar array axis is oriented such, that any Sun incidence is avoided (with the exception of sliding incidence)
- The two spacecraft panels, the panel normal of which is parallel to the solar array axes, are illuminated from the Sun with an incidence angle less than a predefined critical angle
- In the critical area of small Sun elevation angles w.r.t. the orbit plane (yaw angle singularity, yaw flip) the yaw steering motion is continued with application of a dynamic smoothing of the rotation (Dynamic Yaw Steering), not exceeding the spacecraft actuation system capabilities and avoiding any discontinuities in yaw angle, angular rate and angular acceleration
- A procedure for transition from the positive to the negative yaw steering law is derived avoiding any discontinuities in yaw angle
- For improvement of the closed loop attitude control dynamics tracking capabilities, together with the yaw steering reference angle profile the reference angular rate and angular acceleration profile can easily be derived
- The solar array drive mechanism steering laws remain unchanged w.r.t. the known kinematic yaw steering reference profile.
- The Sun incidence requirements w.r.t. the S/P panels can be met with an yaw error of 2˚ (arising e.g. from attitude control), as demonstrated in the reference plots chapter.

   *) A cubic central body with perpendicularly assembled central body outer panels is assumed

## 5. Annex - Reference Plots

The following figures demonstrate the typical behaviour for individual cases, where one plot provides the information for

- Minimum Sun elevation $|\beta_{min}| = 0˚$
- Critical Elevation $|\beta_0| = 2˚ + 0˚$
- Critical Elevation $|\beta_0| = 2˚ - 0˚$
- Maximum Elevation $|\beta_{max}| = 79.44˚$

in a sequence of 5 figures for

- Yaw Steering

    ○ Angle
    ○ Rate
    ○ Angular acceleration

- SADM Steering

&#9675; Angle
&#9675; Rate

- Sun Incidence on

&#9675; + X panel
&#9675; - X panel

- Sun Incidence on

&#9675; + y panel
&#9675; - y panel

- Sun Incidence on

&#9675; + Solar array panel
&#9675; - Solar array panel

and for $\beta \geq 0°$, $\beta \leq 0°$ and for the transient from $\beta \geq 0°$ to $\beta \leq 0°$.

As can be demonstrated, the steering law provides significant margin from the < 2° Sun incidence requirement on the spacecraft $\pm$y panels.

The last sequence of figures demonstrates the incidence results, if an additional constant yaw error of either +2° or -2° is included (e.g. coming in an "extremely worst case" from attitude control). Again the requirements can be met for the overall yaw attitude control error envelope.

**5.1. Dynamic Yaw Steering for** $\beta \geq \mathbf{0°}$

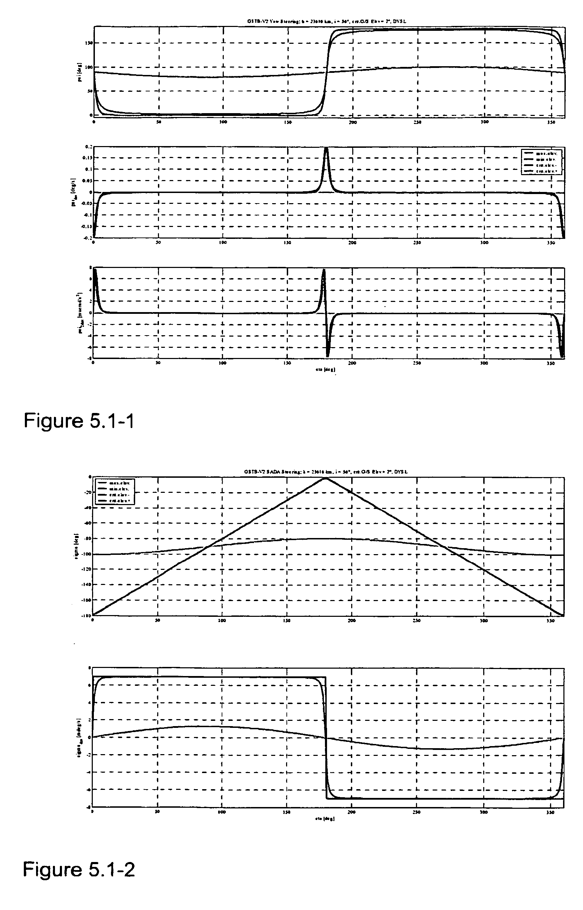

Figure 5.1-1: GSTB-V2 Yaw Steering Angle, Rate and Angular Acceleration for $\beta \geq 0$
Figure 5.1-2: GSTB-V2 SADM Angle and Rate for $\beta \geq 0$

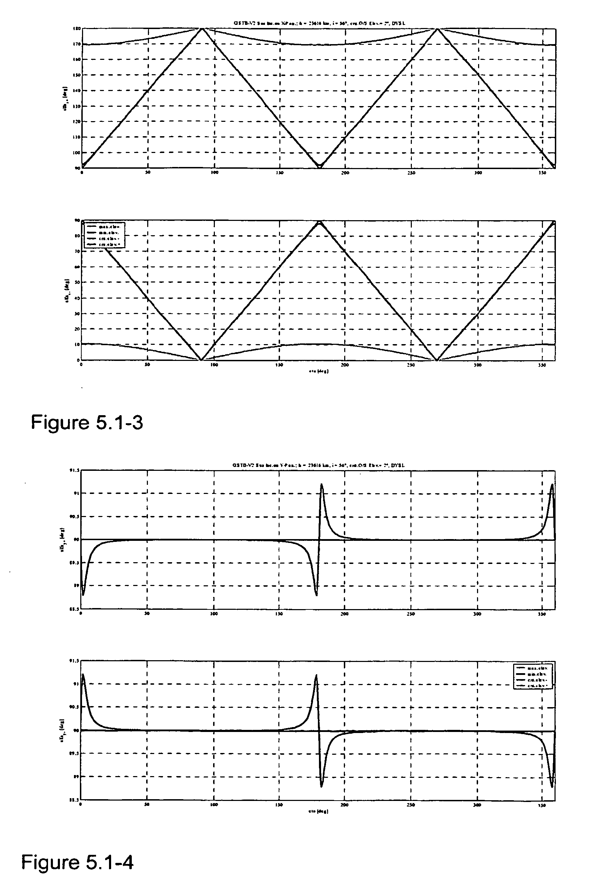

Figure 5.1-3: GSTB-V2 Sun Incidence on +/- x-Panel for $\beta \geq 0$
Figure 5.1-4: GSTB-V2 Sun Incidence on +/- y-Panel for $\beta \geq 0$

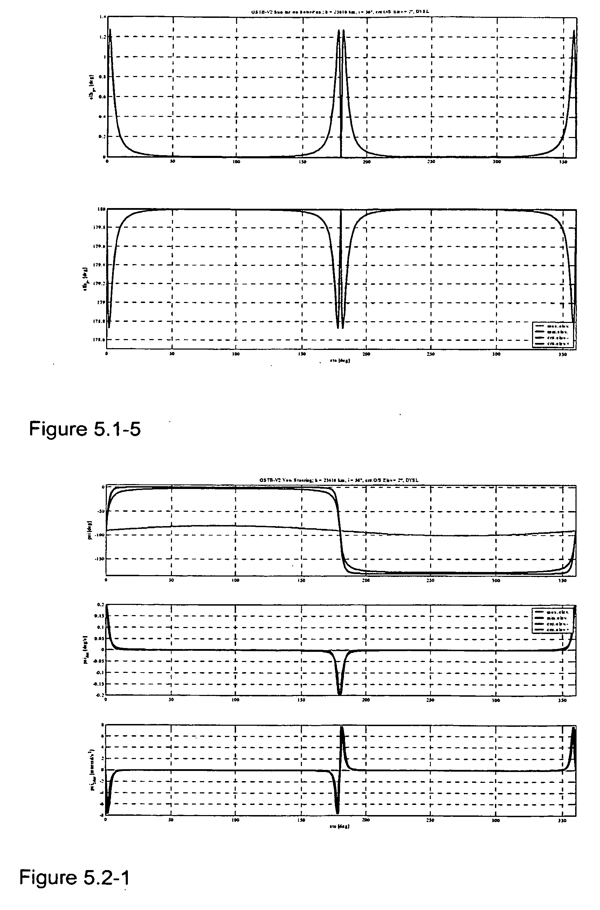

Figure 5.1-5: GSTB-V2 Sun Incidence on +/- Solar Array Panel for $\beta \geq 0$

**5.2. Dynamic Yaw Steering for** $\beta \leq \mathbf{0°}$

Figure 5.2-1: GSTB-V2 Yaw Steering Angle, Rate and Angular Acceleration for $\beta \leq 0$

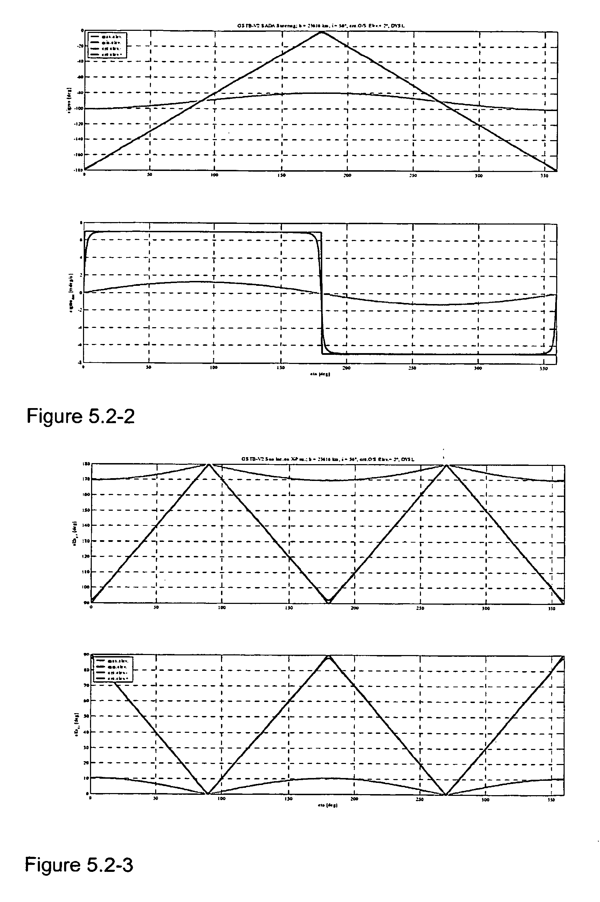

Figure 5.2-2: GSTB-V2 SADM Angle and Rate for $\beta \leq 0$
Figure 5.2-3: GSTB-V2 Sun Incidence on +/- x-Panel for $\beta \leq 0$

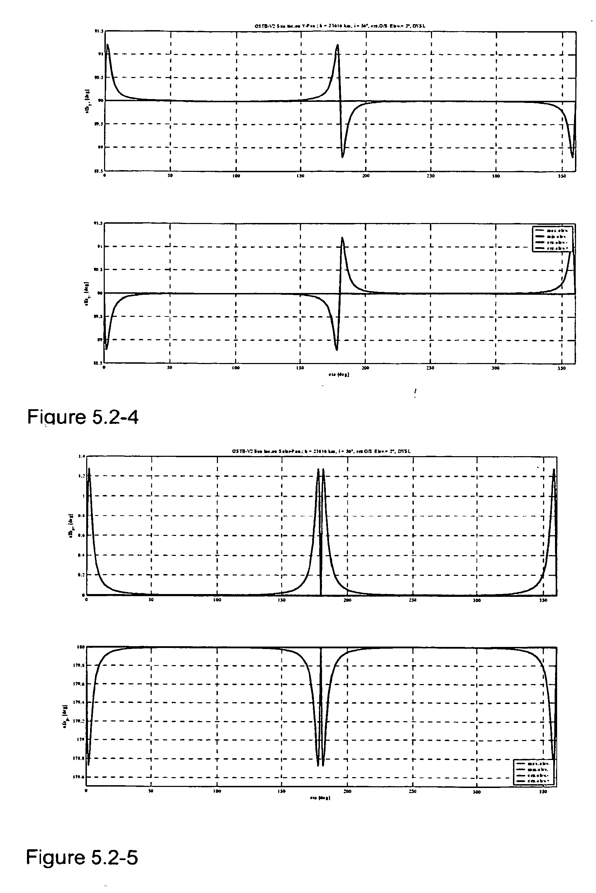

Figure 5.2-4: GSTB-V2 Sun Incidence on +/- y-Panel for $\beta \leq 0$
Figure 5.2-5: GSTB-V2 Sun Incidence on +/- Solar Array Panel for $\beta \leq 0$

**5.3. Dynamic Yaw Steering for Transient from** $\beta \geq \mathbf{0°}$ **to** $\beta \leq \mathbf{0°}$

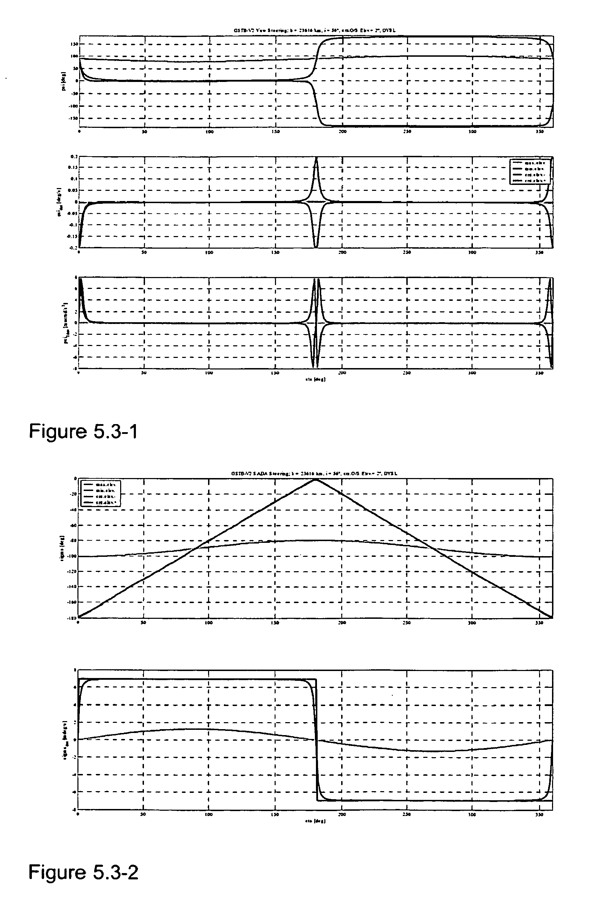

Figure 5.3-1: GSTB-V2 Yaw Steering Angle, Rate and Angular Acceleration for $\beta$ transient
Figure 5.3-2: GSTB-V2 SADM Angle and Rate for $\beta$ transient

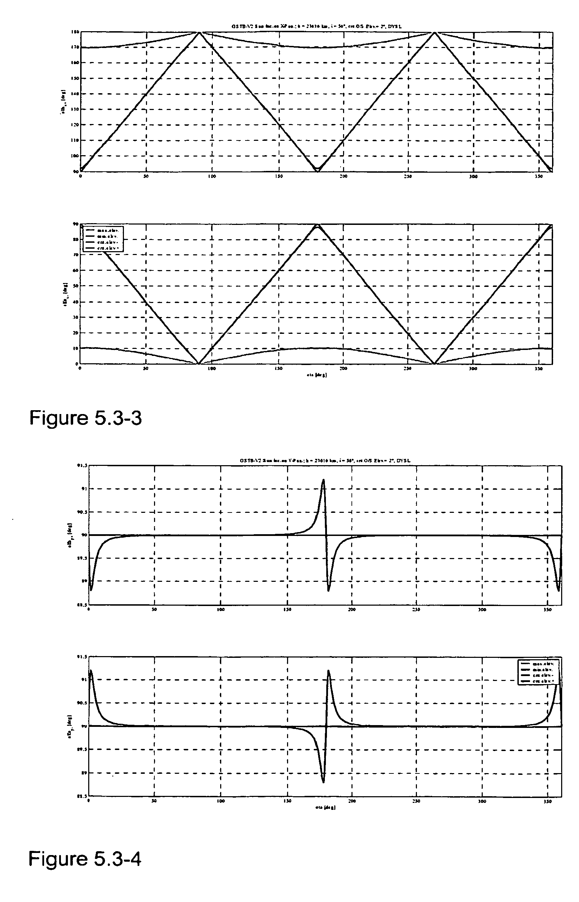

Figure 5.3-3: GSTB-V2 Sun Incidence on +/- x-Panel for $\beta$ transient
Figure 5.3-4: GSTB-V2 Sun Incidence on +/- y-Panel for $\beta$ transient

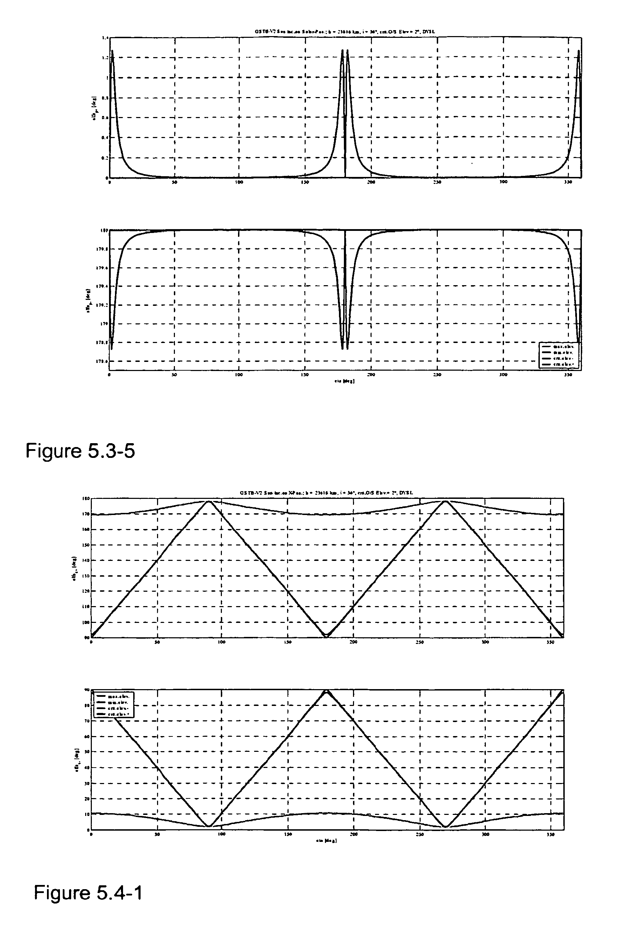

Figure 5.3-5: GSTB-V2 Sun Incidence on +/- Solar Array Panel for $\beta$ transient

**5.4. Dynamic Yaw Steering for** $\beta \geq \mathbf{0°}$ **and** $\pm \mathbf{2°}$ **Yaw Bias Error**

Figure 5.4-1: GSTB-V2 Sun Incidence on +/- x-Panel for $\beta \geq 0$ and +2˚ Yaw Bias

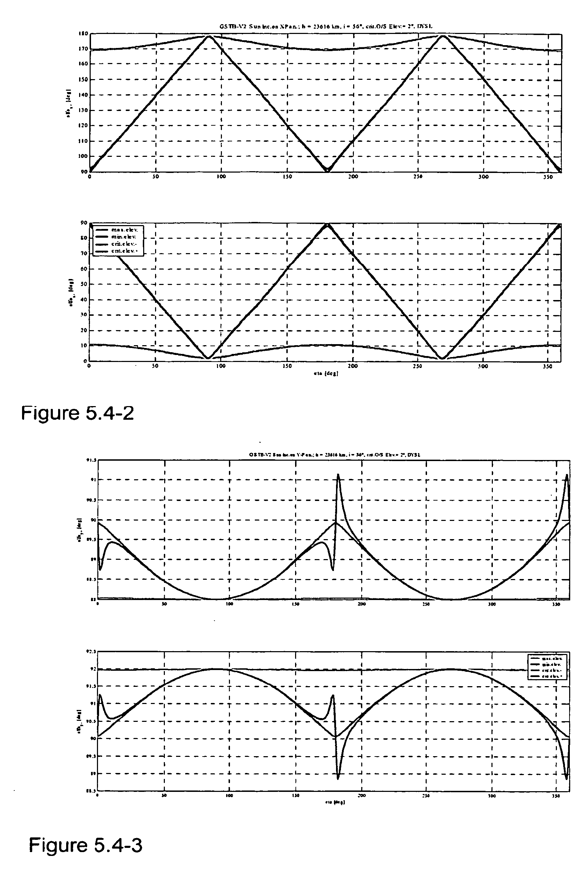

Figure 5.4-2: GSTB-V2 Sun Incidence on +/- x-Panel for $\beta \geq 0$ and -2˚ Yaw Bias
Figure 5.4-3: GSTB-V2 Sun Incidence on +/- y-Panel for $\beta \geq 0$ and +2˚ Yaw Bias

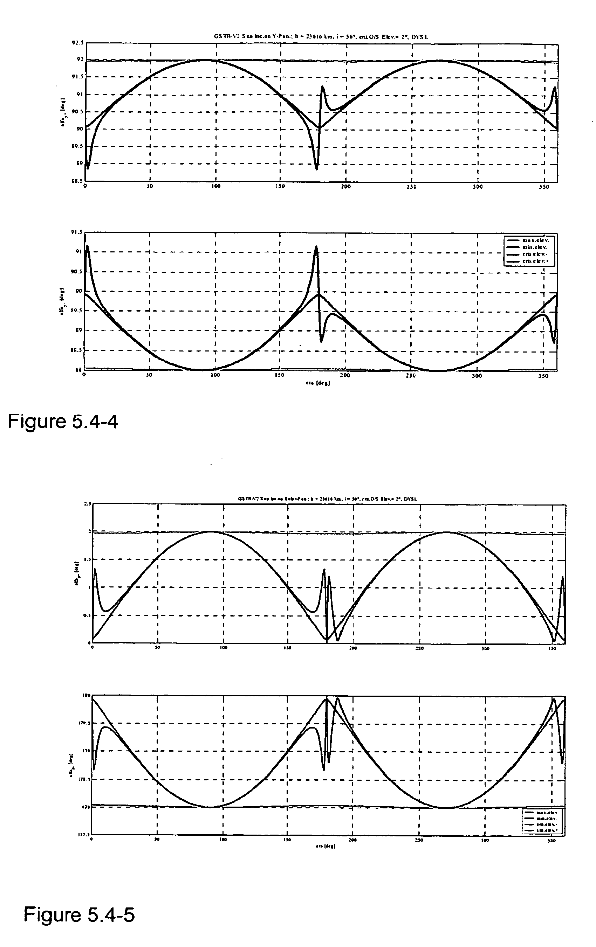

Figure 5.4-4: GSTB-V2 Sun Incidence on +/- y-Panel for $\beta \geq 0$ and -2˚ Yaw Bias
Figure 5.4-5: GSTB-V2 Sun Incidence on +/- Solar Array Panel for $\beta \geq 0$ & +2˚ Yaw Bias

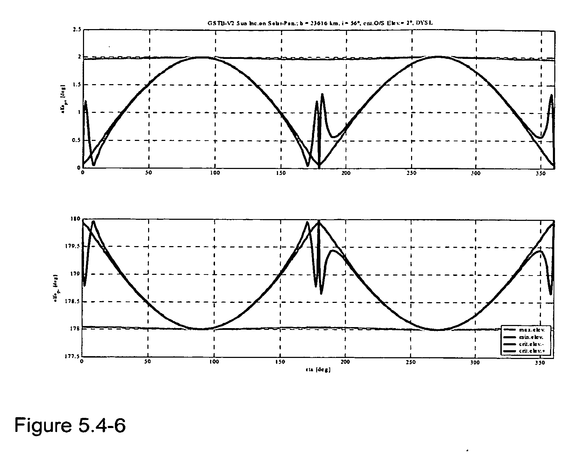

Figure 5.4-6: GSTB-V2 Sun Incidence on +/- Solar Array Panel for $\beta \geq 0$ & -2˚ Yaw Bias

## 6. Annex 2 - Yaw Steering Specification (Matlab M-File)

```
function [psi,psid,psi2d,sigma,sigmad] = DYSL(eta,beta,beta0,delta,psim1,omega0,d,opt)

%###########################################################################
#
%
% function [psi,psid,psi2d,sigma,sigmad] = DYSL(eta,beta,beta0,omega0,d,opt)
%
% PURPOSE:
% Dynamic Yaw Steering Law
%
% IN:
%       eta    -  orbit angle [rad]
%       beta   -  Sun elevation [rad]
%       beta0  -  critical Sun elevation [rad]
%       psim1  -  yaw steering angle one step before [rad]
%       omega0 -  orbit rate [rad]
%       d      -  design parameter [1]
%       opt    -  yaw steering option [1]
%               = 0 for Constant Yaw
%               = 1 for Dynamic Yaw Steering
%
% OUT:
%       psi    -  yaw steering angle [rad]
%       psid   -  yaw steering angular rate [rad/s]
%       psi2d  -  yaw steering angular acceleration [rad/s2]
%       sigma  -  SADM - angle [rad]
%       sigmad -  SADM - angular rate [rad/s]
%
% Author: W.Oesterlin, K.Ebert, 17.10.03
%
%###########################################################################
#

%-------------------------------------------------------------------
% Additional functions needed:
% none
%
%-------------------------------------------------------------------
% References: Technical Note on Dynamic Yaw Steering
%
%-------------------------------------------------------------------
```

```
% Remarks:
% Note: No input data consistency check is performed !
%
%-------------------------------------------------------------------
% Change log:
%
%-------------------------------------------------------------------


if (abs(beta) < beta0) & opt == 0  % +++++++++++++++ Constant Yaw ++++++++++++

    psi    = 0;
    psid   = 0;
    psi2d  = 0;

    sigma   = eta - pi;
    sigmad  = omega0;

else  % +++++++++++++++++++++++++++++++++++++++++++ Yaw Steering
++++++++++++++++++++++++

    se = sin(eta); ce = cos(eta); s2e = sin(2*eta); c2e = cos(2*eta);

    f = 0; fd = 0; f2d = 0;        % ----- Kinematic Yaw Steering ---------

    if abs(beta) < beta0           % ----- Dynamic Yaw Steering -----------

        f   = ce^2/(1+d*se^2);
        fd  = -(1+d)*omega0*s2e/(1+d*se^2)^2;
        f2d = -2*(1+d)*omega0^2*(c2e-d*se^2*(1+2*ce^2))/(1+d*se^2)^3;

    end

    dbeta = beta0*delta-beta;
    betad = beta + dbeta*f;
    bd    = dbeta*fd;
    b2d   = dbeta*f2d;

    tb = tan(betad); sb = sin(betad); cb = cos(betad);
    c2b = cos(2*betad); s2b = sin(2*betad);

    psi  = atan2(tb,se);           % ------- Yaw Steering Angle ----------
    dpsi = psi - psim1;
    if abs(dpsi) > pi
        psi = psi - 2*pi*sign(dpsi);% ---- Modified Yaw Steering Angle ----
    end

    u    = se*bd - 0.5*s2b*ce*omega0;
```

```
v    = 1-(cb*ce)^2;
psid = u/v;                % ---- Yaw Steering Angular Rate ------

ud    = ce*omega0*bd + se*b2d - (c2b*ce*bd - s2b*se*omega0/2)*omega0;
vd    = s2b*ce^2*bd + cb^2*s2e*omega0;
psi2d = (v*ud - u*vd)/v^2;   % - Yaw Steering Angular Acceleration -


% ++++++++++++++++++++++++++++++ SADA Steering
++++++++++++++++++++++++++++++++

cb = cos(beta); w  = sqrt(abs(1-cb^2*ce^2));

sigma  = atan2(-w,-cb*ce);   % ------SADA Steering Angle ------------
if w < eps
   sigmad = omega0*sign(se);
else
   sigmad = omega0*cb*se/w;  % --- SADA Steering Angular Rate --------
end

end


%############################## end DYSL
##########################################
```

## Claims

1. Method for yaw steering of a spacecraft yaw angle comprising the steps of
determine an elevation angle ($\beta$) of the sun (S) with respect to the orbit plane of the spacecraft,
determine an orbit in plane motion angle ($\eta$) of the spacecraft,
for $|\beta| \geq \beta_0$, $\beta_0$ being a defined sun elevation: determine a spacecraft reference yaw angle ($\psi$) using the elevation angle ($\beta$) and the motion angle ($\eta$) by applying a standard yaw steering law: $\psi = \text{atan2}(\tan\beta, \sin\eta)$
for $|\beta| < \beta_0$: determine a spacecraft reference yaw angle ($\psi$) using a smoothed elevation angle ($\beta_d$) and the motion angle ($\eta$) by applying a modified yaw steering law: $\psi = \text{atan2}(\tan\beta_d, \sin\eta)$
determine the smoothed elevation angle ($\beta_d$) using the elevation angle ($\beta$) and the motion angle ($\eta$), such that:
for $\beta = \beta_0$. the transient between the standard and the modified Yaw Steering solution is obtained in a continuous way,
for $|\beta| < \beta_0$ and in a certain range around critical angles of the motion angle ($\eta$) where high rotational rates ($\psi'$) and accelerations ($\psi''$) would have occurred when applying the standard yaw steering law, the smoothed elevation angle ($\beta_d$) tends towards the limit angle $\pm(\beta_0)$ so that the yaw steering motion is smoothed to a behavior like for the defined Sun elevation $\pm(\beta_0)$, and
for $|\beta| < \beta_0$ and in the dynamically non-critical rest period along the motion angle ($\eta$), the yaw steering motion is performed as for the smoothed elevation angle ($\beta_d$) tends towards the elevation angle ($\beta$), which is close to the standard Yaw Steering solution, such that the yaw steering motion in total is smooth, avoiding any discontinuities for the yaw steering angle ($\psi$) as well for rate ($\psi'$) and angular acceleration ($\psi''$).

2. Method according to claim 1, **characterized in that** the yaw steering motion is smoothed by a smoothing function (f) being a function of the orbit in plane motion angle ($\eta$).

3. Method according to claim 2, the preceding **characterized in that** the smoothing function (f) comprises a design parameter (d) which can be adapted in order to optimize the smoothing effect of smoothing function (f).

4.  Method according to one of the preceding claims, **characterized in that** a smooth transient between a positive yaw steering shape for $\beta > 0$ and a negative yaw steering shape for $\beta < 0$ is performed at a sun elevation angle $\beta \cong 0$ and at an orbit angle $\eta = 90°$ or $270°$.

5.  Method according to one of the preceding claims, **characterized in that** the yaw steering is performed such that a first panel of the satellite body structure is always directed away from the sun.

6.  Method according to claim 5, **characterized in that** the plane defined by the first panel is oriented parallel to the yaw axis of the satellite.

7.  Method according to one of the preceding claims, **characterized in that** the yaw steering is performed such that a second and third panel of the satellite body structure always have an incident sun angle smaller than a defined angle.

8.  Method according to one of the preceding claims, **characterized in that** the smoothing function (f) is defined as :

$$f = \frac{\cos^2 \eta}{1 + d \cdot \sin^2 \eta}$$

9.  Method according to claim 8, **characterized in that** the guidance law is based on the following functions:
    for

$$|\beta| \geq \beta_0 :$$

$$(1) \qquad f = 0$$

and for

$$|\beta| < \beta_0 :$$

$$(2) \qquad f = \frac{\cos^2 \eta}{1 + d \cdot \sin^2 \eta}$$

$$(3) \qquad \beta_d = \beta + f \cdot (\beta_0 \cdot \delta - \beta), \quad \delta = \pm 1$$

$$(4) \qquad \psi = \text{atan2}(\tan \beta_d, \sin \eta).$$

**EP 1 526 072 B1**

**Patentansprüche**

1. Verfahren zur Giersteuerung eines Raumfahrzeuggierwinkels, umfassend die folgenden Schritte:

   Bestimmen eines Höhenwinkels ($\beta$) der Sonne (S) bezüglich der Bahnebene des Raumfahrzeugs,
   Bestimmen eines Bewegungswinkels ($\eta$) des Raumfahrzeugs innerhalb der Bahnebene,
   für $|\beta| \geq \beta_0$, wobei $\beta_0$ eine definierte Sonnenhöhe ist: Bestimmen eines Raumfahrzeugreferenzgierwinkels ($\psi$) unter Verwendung des Höhenwinkels ($\beta$) und des Bewegungswinkels ($\eta$) durch Anwenden eines standardmäßigen Giersteuerungsgesetzes: $\psi = \mathrm{atan}\,2(\tan \beta, \sin \eta)$,
   für $|\beta| < \beta_0$: Bestimmen eines Raumfahrzeugreferenzgierwinkels ($\psi$) unter Verwendung eines geglätteten Höhenwinkels ($\beta_d$) und des Bewegungswinkels ($\eta$) durch Anwenden eines modifizierten Giersteuerungsgesetzes: $\psi = \mathrm{atan}\,2\,(\tan \beta_d, \sin \eta)$,
   Bestimmen des geglätteten Höhenwinkels ($\beta_d$) unter Verwendung des Höhenwinkels ($\beta$) und des Bewegungswinkels ($\eta$), so daß
   für $\beta = \beta_0$ der Transient zwischen der standardmäßigen und der modifizierten Giersteuerungslösung auf kontinuierliche Weise erhalten wird,
   für $|\beta| < \beta_0$ und in einem bestimmten Bereich um kritische Winkel des Bewegungswinkels ($\eta$), wo hohe Rotationsraten ($\psi'$) und Beschleunigungen ($\psi''$) aufgetreten wären, wenn das standardmäßige Giersteuerungsgesetzt angewendet wird, tendiert der geglättete Höhenwinkel ($\beta_d$) im allgemeinen zum Grenzwinkel $\pm(\beta_0)$, so daß die Giersteuerungsbewegung auf ein Verhalten wie für die definierte Sonnenhöhe $\pm(\beta_0)$ geglättet wird, und
   für $|\beta| < \beta_0$ und in der dynamischen unkritischen Ruheperiode entlang des Bewegungswinkels ($\eta$) wird die Giersteuerungsbewegung hinsichtlich des geglätteten Höhenwinkels ($\beta_d$) durchgeführt, der zu dem Höhenwinkel ($\beta$) tendiert, der nahe bei der standardmäßigen Giersteuerungslösung liegt, so daß die Giersteuerungsbewegung insgesamt glatt ist, wodurch etwaige Diskontinuitäten für den Giersteuerungswinkel ($\psi$) sowie für Rate ($\psi'$) und Winkelbeschleunigung ($\psi''$) vermieden werden.

2. Verfahren nach Anspruch 1, **dadurch gekennzeichnet, daß** die Giersteuerungsbewegung durch eine Glättungsfunktion (f) geglättet wird, die eine Funktion des Bewegungswinkels ($\eta$) innerhalb der Bahnebene ist.

3. Verfahren nach Anspruch 2, **dadurch gekennzeichnet, daß** die Glättungsfunktion (f) einen Designparameter (d) umfaßt, der adaptiert werden kann, um den Glättungseffekt der Glättungsfunktion (f) zu optimieren.

4. Verfahren nach einem der vorhergehenden Ansprüche, **dadurch gekennzeichnet, daß** ein glatter Tansient zwischen einer positiven Giersteuerungsform für $\beta > 0$ und einer negativen Giersteuerungsform für $\beta < 0$ bei einem Sonnenhöhenwinkel $\beta \cong 0$ und bei einem Umlaufwinkel $\eta = 90°$ oder $270°$ durchgeführt wird.

5. Verfahren nach einem der vorhergehenden Ansprüche, **dadurch gekennzeichnet, daß** die Giersteuerung derart durchgeführt wird, daß eine erste Paneele der Satellitenkörperstruktur immer von der Sonne weggerichtet ist.

6. Verfahren nach Anspruch 5, **dadurch gekennzeichnet, daß** die durch die erste Paneele definierte Ebene parallel zu der Gierachse des Satelliten orientiert ist.

7. Verfahren nach einem der vorhergehenden Ansprüche, **dadurch gekennzeichnet, daß** die Giersteuerung derart durchgeführt wird, daß eine zweite und dritte Paneele der Satellitenkörperstruktur immer einen Sonneneinfallswinkel größer als ein definierter Winkel aufweisen.

8. Verfahren nach einem der vorhergehenden Ansprüche, **dadurch gekennzeichnet, daß** die Glättungsfunktion (f) definiert ist als:

$$f = \frac{\cos^2 \eta}{1 + d \cdot \sin^2 \eta}$$

9. Verfahren nach Anspruch 8, **dadurch gekennzeichnet, daß** das Führungsgesetz auf den folgenden Funktionen basiert:

für

$$|\beta| \geq \beta_0:$$

$$(1) \quad f = 0$$

und für

$$|\beta| < \beta_0:$$

$$(2) \quad f = \frac{\cos^2\eta}{1+d\cdot\sin^2\eta}$$

$$(3) \quad \beta_d = \beta + f \cdot (\beta_0 \cdot \delta - \beta), \quad \delta = \pm 1$$

$$(4) \quad \psi = \text{atan2}(\tan\beta_d, \sin\eta).$$

**Revendications**

1. Procédé de contrôle en lacet de l'angle de lacet d'un engin spatial comprenant les étapes de :

la détermination d'un angle de site ($\beta$) du soleil (S) par rapport au plan orbital de l'engin spatial,
la détermination d'un angle de mouvement ($\eta$) de l'engin spatial dans le plan orbital,
pour $|\beta| \geq \beta_0$, $\beta_0$ étant un site défini du soleil : la détermination d'un angle de lacet ($\psi$) de référence d'un engin spatial en utilisant l'angle de site ($\beta$) et l'angle de mouvement ($\eta$) en appliquant une loi de contrôle en lacet standard :

$$\psi = \text{atan2}(\tan\beta, \sin\eta)$$

pour $|\beta| < \beta_0$ : la détermination d'un angle de lacet ($\psi$) de référence d'un engin spatial en utilisant un angle de site ($\beta_d$) lissé et l'angle de mouvement ($\eta$) en appliquant une loi de contrôle en lacet modifiée :

$$\psi = \text{atan2}(\tan\beta_d, \sin\eta)$$

la détermination de l'angle de site ($\beta_d$) lissé en utilisant l'angle de site ($\beta$) et l'angle de mouvement ($\eta$) de telle sorte que :
pour $\beta = \beta_0$, la transition entre la solution de Contrôle en Lacet standard et la solution modifiée est obtenue de manière continue,
pour $|\beta| < \beta_0$ et dans une certaine plage autour des angles critiques de l'angle de mouvement ($\eta$) pour lesquels

l'application de la loi de contrôle en lacet standard aurait produit des vitesses ($\psi'$) et des accélérations ($\psi''$) de rotation élevées, l'angle de site ($\beta_d$) lissé tendant vers l'angle limite $\pm(\beta_0)$ de telle sorte que le mouvement du contrôle en lacet est lissé pour un comportement similaire à celui du site défini du Soleil $\pm(\beta_0)$ , et

pour $|\beta| < \beta_0$ et dans la période de repos dynamiquement non critique autour de l'angle de mouvement ($\eta$), le mouvement du contrôle en lacet est assuré comme pour l'angle de site ($\beta_d$) lissé tendant vers l'angle de site ($\beta$) qui est proche de la solution du Contrôle en Lacet standard de telle sorte que le mouvement global du contrôle en lacet est lisse, évitant toute discontinuité de l'angle de contrôle en lacet ($\psi$) ainsi que de la vitesse ($\psi'$) et de l'accélération ($\psi''$) angulaires.

2. Procédé selon la revendication 1, **caractérisé en ce que** le mouvement du contrôle en lacet est lissé par une fonction de lissage (f) qui est une fonction de l'angle de mouvement ($\eta$) dans le plan orbital

3. Procédé selon la revendication 2, **caractérisé en ce que** la fonction de lissage (f) comprend un paramètre de conception (d) qui peut être adapté pour optimiser l'effet de lissage de la fonction de lissage (f).

4. Procédé selon une des revendications précédentes, **caractérisé en ce qu'**une transition lisse entre une forme positive de contrôle en lacet pour $\beta > 0$ et une forme négative de contrôle en lacet pour $\beta < 0$ est assurée pour un angle de site du soleil $\beta \cong 0$ et pour un angle orbital $\eta = 90°$ ou $270°$.

5. Procédé selon une des revendications précédentes, **caractérisé en ce que** le contrôle en lacet est assuré de telle sorte qu'un premier panneau de la structure du corps du satellite est toujours dirigé à l'opposé du soleil.

6. Procédé selon la revendication 5, **caractérisé en ce que** le plan défini par le premier panneau est orienté parallèlement à l'axe de lacet du satellite.

7. Procédé selon une des revendications précédentes, **caractérisé en ce que** le contrôle en lacet est assuré de telle sorte qu'un deuxième et un troisième panneaux de la structure du corps du satellite ont toujours un angle d'incidence du soleil inférieur à un angle défini.

8. Procédé selon une des revendications précédentes, **caractérisé en ce que** la fonction de lissage (f) est définie par :

$$f = \frac{\cos^2 \eta}{1 + d \cdot \sin^2 \eta}$$

9. Procédé selon la revendication 8, **caractérisé en ce que** la loi de guidage est basée sur les fonctions suivantes :
pour $|\beta| \geq \beta_0$ :

$$(1) \quad f = 0$$

et pour $|\beta| < \beta_0$ :

$$(2) \quad f = \frac{\cos^2 \eta}{1 + d \cdot \sin^2 \eta}$$

$$(3) \quad \beta_d = \beta + f \cdot \left(\beta_0 \cdot \delta - \beta\right), \quad \delta = \pm 1$$

$$(4) \quad \psi = a\tan 2(\tan\beta_d, \sin\eta).$$

Figure 3.1-1

Figure 3.1-2

Figure 3.1-3

Figure 3.2-1

Figure 3.2-2

Figure 3.2-3

Figure 3.2-4

Figure 3.3-1

Figure 3.3-2

Figure 3.3-3

Figure 3.3-4

Figure 5.1-1

Figure 5.1-2

Figure 5.1-3

Figure 5.1-4

Figure 5.1-5

Figure 5.2-1

Figure 5.2-2

Figure 5.2-3

Figure 5.2-4

Figure 5.2-5

Figure 5.3-1

Figure 5.3-2

Figure 5.3-3

Figure 5.3-4

Figure 5.3-5

Figure 5.4-1

Figure 5.4-2

Figure 5.4-3

Figure 5.4-4

Figure 5.4-5

Figure 5.4-6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Sirius satellite design: The challenges of the Tundra orbit in commercial spacecraft design. **LEE BARKER ; JEFFREY STOEN.** GUIDANCE AND CONTROL 2001, PROCEEDINGS OF THE ANNUAL AAS ROCKY MOUNTAIN CONFERENCE. BRECKENRIDGE, CO, 31 January 2001, 575-596